# FASCICULE DE BREVET EUROPEEN

(11) **EP 1 080 311 B1**
(45) Date de publication et mention de la délivrance du brevet: **23.08.2006**
(21) Numéro de dépôt: 99920940.6
(22) Date de dépôt: 28.05.1999
(51) Int. Cl.: F16C 1/20, F16C 29/06

(54) **CABLE POUR COMMANDE A DISTANCE**
FERNBEDIENUNGSKABEL
REMOTE CONTROL CABLE

(30) Priorité: 29.05.1998 FR 9806820
(43) Date de publication de la demande: 07.03.2001
(73) Titulaire: Constructions Brevetées d'Alfortville - CBA, 94140 Alfortville (FR)
(72) Inventeur: AGOSTINI, Jacques, F-91230 Montgeron (FR)
(74) Mandataire: Barbin le Bourhis, Joël
(86) Numéro de dépôt international: PCT/FR1999/001262
(87) Numéro de publication internationale: WO 1999/063238

(56) Documents cités:
- EP-A- 0 826 891
- FR-A- 2 454 014
- GB-A- 514 771
- US-A- 3 298 243
- US-A- 4 188 835
- US-A- 4 238 973
- US-A- 5 184 898
- catalogue de INA, 'Wellenführungen', février 1991, pages 6 et 23

## Description

La présente invention concerne un câble de commande à distance.

Il existe déjà des câbles de commande mécanique qui comprennent une lame centrale se déplaçant axialement en étant guidée dans une gaine par des organes de roulements, telles des billes, entre un premier rail et un second rail diamétralement opposés. Les deux extrémités du câble comportent des embouts sertis sur la gaine qui recouvrent le câble lui-même. Une tige servant à relier la lame centrale du câble à un organe de commande traverse l'embout de gaine. Cette tige est fixée à la lame et est susceptible de coulisser à l'intérieur de l'embout de façon à transmettre un effort en traction ou compression à la lame centrale du câble. Un tel câble de commande est par exemple connu du document US 4 188 835 A.

Les axes de la tige et de l'embout ne sont pas parfaitement alignés ce qui crée des frottements radiaux entre la face externe de la tige et la face interne de l'embout. Il arrive même que la tige se coince à l'intérieur de l'embout rendant ainsi l'utilisation du câble de commande impossible. Les frottements engendrés rendent la transmission de l'effort moins facile, entraînent une chute du rendement global du câble et accélèrent son usure. En général, les solutions de l'art antérieur pour aligner les axes de la tige et de la lame centrale ne donnent pas de résultats satisfaisants tant au point de vue du coulissement (rendement) que du jeu diamétral.

Dans certaines applications, et en particulier dans l'aéronautique, les commandes des principaux organes (volets, rotor, pales...) sont constituées de systèmes mécaniques complexes à bielles et renvois qui sont, en outre, très lourds et rigides.

Les câbles de commande traditionnels qui sont plus légers et moins encombrants ne peuvent malheureusement pas être utilisés en remplacement de ces systèmes mécaniques.

En effet, l'actionnement des commandes est effectué, dans la plupart des cas, par le biais de contacteurs (pédales, leviers....) agissant par un effort radial sur l'extrémité de la tige du câble.

Or, cet effort radial entraîne des frottements néfastes qui sont susceptibles de provoquer un blocage de la tige dans l'embout et de conduire à une panne de commande de l'organe en cause.

Au surplus, certains de ces organes sont destinés à être au moins temporairement contrôlés par un pilote automatique.

Or, le pilote automatique, à la différence d'un opérateur manuel, n'est pas capable d'intégrer les résistances dues aux frottements dans l'embout du fait que sa très grande sensibilité imposée par les mesures indispensables de sécurité.

Par ailleurs, les douilles à billes telles que celles qui sont décrites dans le FR 2 454 014 A ou le US 5 184 898 A sont toujours utilisées dans des applications à guidage linéaire où les efforts pour l'actionnement sont dirigés coaxialement et non radialement à la tige mobile.

La présente invention se propose de résoudre les problèmes techniques posés par l'art antérieur.

Ce but est atteint selon la revendication 1 au moyen d'un câble pour commande à distance comprenant une lame centrale se déplaçant axialement en étant guidée dans une gaine par des organes de roulement et coulissant entre un premier rail et un second rail diamétralement opposés et une tige de sortie connectée à chacune des extrémités de la lame et coulissant à l'intérieur d'un embout de gaine.

Ce câble est caractérisé en ce que l'embout de gaine comporte entre sa face interne et la surface externe de la tige, des moyens de guidage axial de la tige et des moyens destinés à réduire les frottements radiaux entre la tige et l'embout. En outre, les moyens de guidage axial de la tige de sortie comportent au moins une bague d'une longueur suffisante pour assurer le guidage axial de la tige par rapport à l'embout ; ladite bague étant constituée de deux éléments cylindriques coaxiaux respectivement interne et externe, délimitant entre eux des cages dans lesquelles sont enfermés des trains de billes. Les cages comportent au moins une cavité débouchant au moins partiellement sur la surface interne de l'élément cylindrique interne de façon à permettre le contact rotatif des billes avec ladite tige. Les moyens destinés à réduire les frottements comportent des billes disposées entre la paroi interne de l'embout et la surface externe de ladite tige de façon à ce qu'elles puissent venir en contact rotatif avec la surface externe de la tige.

Le dispositif selon la présente invention permet d'assurer simultanément un guidage axial de la tige et une réduction importante des frottements radiaux et axiaux, ce qui évite tout coincement de la tige et augmente le rendement global du câble de commande à distance. En outre, l'embout assure ici la conversion d'un effort radial en roulement et donc en mouvement axial de la tige.

La bague munie de billes regroupe dans un même élément les moyens de guidage axial et les moyens destinés à réduire les frottements axiaux et radiaux. Une telle bague est de plus facile à manipuler et à introduire à l'intérieur de l'embout de gaine.

De préférence, les cages forment un chemin de guidage permettant la circulation des billes. Les billes sont ainsi simultanément en contact rotatif avec la surface externe de la tige et en déplacement à l'intérieur de la cage. Les frottements sont donc considérablement réduits. Les risques de coincement des billes à l'intérieur des cages sont ainsi fortement réduits.

De préférence, les cages forment des boucles oblongues et fermées. La course des billes est ainsi illimitée. La surface de contact entre les billes et la surface externe de la tige est augmentée ce qui procure un meilleur guidage axial de la tige et réduit encore les frottements radiaux.

Selon un mode de réalisation particulier, les cavités des cages débouchent sur la face interne de l'élément cylindrique interne en formant des orifices en boucle ouverte, la portion complémentaire non débouchante fermant de manière complémentaire la boucle ouverte de l'orifice.

De préférence, l'élément cylindrique externe de la bague comporte des lumières communiquant avec les cages et permettant le passage d'une partie de la surface des billes. Les billes qui ne sont pas au contact de la surface de la tige peuvent ainsi se mouvoir librement, ce qui évite tout risque de coincement des billes dans la cage. Le roulement possible des billes sur la face interne de l'embout permet d'insérer et de retirer facilement la bague.

Avantageusement, les lumières correspondent en projection aux portions complémentaires non débouchantes de la cavité des cages. Cette forme est particulièrement adaptée pour obtenir une surface de roulement relativement importante. Les lumières permettent d'éviter tout risque de coincement des billes.

De préférence, la bague est équipée d'une garniture d'étanchéité annulaire destinée à protéger les cages de l'environnement extérieur. De cette façon, les poussières ou autres impuretés ne peuvent pas pénétrer à l'intérieur de la bague et donc ne peuvent pas gêner la circulation des billes ni occasionner de frottements indésirables.

L'élément cylindrique externe peut comporter un canal d'alimentation des cages en lubrifiant. La lubrification des billes permet d'améliorer la durée de vie de la bague.

De préférence, le câble comporte deux bagues juxtaposées à l'intérieur de l'embout. La surface offerte par deux bagues juxtaposées garantit une surface de roulement suffisante pour être efficace contre les frottements et un excellent guidage axial de la tige.

La présente invention sera mieux comprise à la lecture de la description d'un mode de réalisation pris à titre d'exemple non limitatif, accompagnée des dessins sur lesquels :
- la figure 1 représente un mode de réalisation particulier de la présente invention ;
- la figure 2 représente plus en détail une des bagues équipant la présente invention.

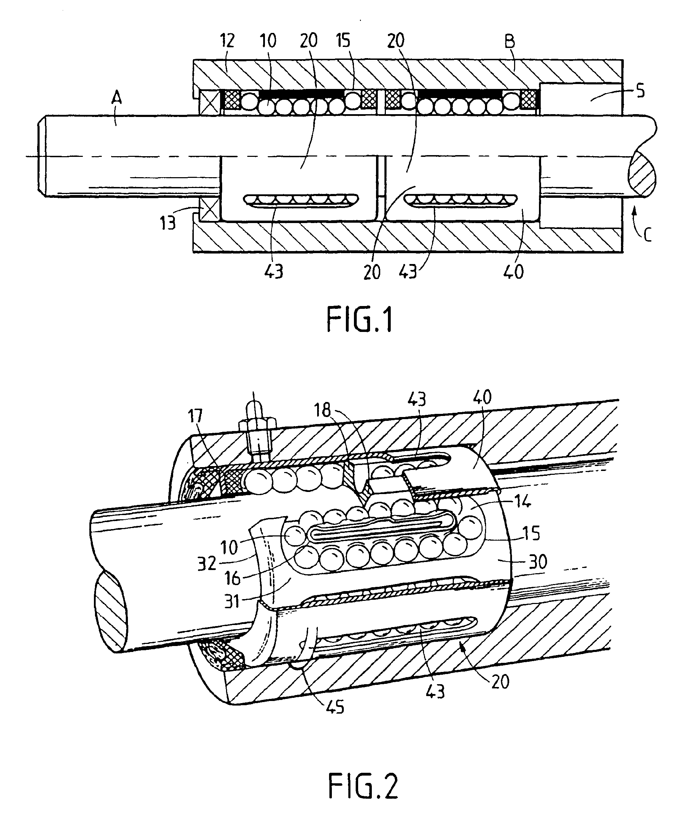

Comme représenté sur la figure 1, la tige mobile et coulissante A traverse l'embout de gaine B. L'embout de gaine B est fixé sur la gaine 5 du câble C. Entre la surface interne de l'embout B et la surface externe de la tige A sont disposés des trains de billes 10 qui sont susceptibles d'entrer en contact rotatif avec la surface de la tige A. Les trains de billes 10 sont disposés sur une longueur suffisamment importante pour que la présence des billes 10 transforme les frottements en roulements et assure le guidage axial de la tige A. De préférence, les trains de billes 10 seront disposés près de l'extrémité 12 de l'embout B de façon à prévenir efficacement tout risque de coincement de la tige contre la surface de l'embout.

Une bague d'étanchéité 13 est disposée à proximité de l'extrémité 12 de l'embout B.

Selon ce mode de réalisation préféré de la présente invention, les trains de billes 10 sont contenus entre deux éléments cylindriques coaxiaux 30 et 40, respectivement interne et externe formant par assemblage, une bague 20. Dans le mode de réalisation préféré représenté sur la figure 1, deux bagues sont juxtaposées à l'intérieur de l'embout.

Les trains de billes 10 disposés dans chacune des bagues 20 sont susceptibles d'entrer en contact rotatif avec la surface externe de la tige A et également de se déplacer à l'intérieur des cages 14 ménagées entre les deux éléments coaxiaux 30 et 40, ce qui réduit encore les frottements radiaux et axiaux.

Le fait de disposer deux bagues côte à côte permet d'avoir une surface de roulement suffisamment importante pour être efficace et d'avoir un bon guidage axial de la tige A. Toutefois, le nombre de bagues dans l'embout n'est pas limité à deux:

Une bague d'étanchéité 13 est de préférence disposée à l'extrémité 12 de l'embout B de façon à empêcher toute poussière ou impureté de pénétrer à l'intérieur de l'embout et d'occasionner des frottements supplémentaires, et donc une usure accrue des billes 10 et de la bague 20 ou de gêner la circulation des billes 10.

La bague d'étanchéité peut également être solidaire de la bague 20 située près de l'extrémité 12 de l'embout B.

Une bague d'étanchéité munie d'une ou deux lèvres correctement orientées par rapport à l'ouverture de l'embout peut parfaitement convenir.

La figure 2 représente plus en détail la bague 20 abritant les trains de billes 10. La bague comporte un élément cylindrique interne 30 et un élément cylindrique externe 40, les deux éléments 30 et 40 étant coaxiaux. L'élément cylindrique externe 40 peut être réalisé en tôle ou tout autre matériau suffisamment résistant mécaniquement.

Les trains de billes 10 sont logés dans au moins une cage 14 formée en partie par une cavité 15 dans l'élément cylindrique interne 30. Cette cavité 15 peut former une boucle fermée plus ou moins allongée et peut être totalement débouchante sur la face externe 31 de l'élément cylindrique interne 30. La cavité 15 est partiellement débouchante sur la face interne 32 de l'élément cylindrique interne 30 de façon à permettre le contact rotatif des billes sur la face externe de la tige A.

Au centre de la cage 14 est disposé un insert 16 qui peut, soit être ajouté, soit être réalisé d'une seule pièce avec l'élément interne 30, par moulage. L'élément interne 30 peut être réalisé, par exemple, avec un matériau thermoplastique. De préférence, cet insert 16 est en matériau suffisamment élastique pour pouvoir se déformer et maintenir ainsi élastiquement les billes 10 à l'intérieur de la cage 14 sans freiner leur circulation

De préférence, la cavité 15 de la cage 14 est débouchante sur la surface interne 32 de l'élément cylindrique 30 et forme sur cette surface un orifice en boucle ouverte 17. La portion 18 de la cavité 15, non débouchante sur la face interne de l'élément cylindrique interne 30 forme donc une portion sensiblement rectiligne complémentaire de l'orifice 17 en fermant la boucle ouverte.

Des lumières sensiblement rectilignes 43 sont ménagées dans l'élément cylindrique externe 40. La position de chaque lumière 43 correspond, en projection, à la position de la portion 18 non débouchante de la cavité 15. Ces lumières 43 sont parallèles aux portions non débouchantes 18 et parallèles également aux génératrices de la bague 20. Les billes 10 peuvent partiellement dépasser par la lumière 43 lorsqu'elles se situent sur la portion sensiblement rectiligne 18, ce qui facilite leur circulation.

Le canal 45 d'alimentation en lubrifiant des billes 10, est de préférence placé près de l'extrémité 12 de l'embout B de façon à être facilement accessible et peut être ménagé sur la surface interne de l'élément cylindrique externe 40.

D'autres lumières peuvent également être ménagées en regard de la partie débouchante 17. Il est également possible de prévoir entre les deux éléments cylindriques 30 et 40 un espace suffisant pour pouvoir s'affranchir de la présence des lumières 43.

## Revendications

1. Câble pour commande à distance (C) comprenant une lame centrale se déplaçant axialement en étant guidée dans une gaine (5) par des organes de roulement et coulissant entre un premier rail et un second rail diamétralement opposés et une tige de sortie (A) connectée à chacune des extrémités de ladite lame et coulissant à l'intérieur d'un embout de gaine (B),
**caractérisé en ce que** ledit embout de gaine (B) comporte entre sa face interne et la surface externe de ladite tige de sortie (A), au moins une bague (20) de longueur suffisante pour assurer le guidage axial de ladite tige par rapport audit embout;
ladite bague (20) étant constituée de deux éléments cylindriques coaxiaux respectivement interne (30) et externe (40) délimitant entre eux des cages (14) dans lesquelles sont enfermés des trains de billes (10), lesdites cages (14) comportant au moins une cavité (15) débouchant au moins partiellement sur la surface interne (32) dudit élément cylindrique interne (30) de façon à permettre le contact rotatif desdites billes (10) avec la surface externe de la tige (A) de façon à réduire les frottements entre ladite tige (A) et l'embout (B).

2. Câble pour commande à distance (C) selon la revendication 1, **caractérisé en ce que** lesdites cages (14) forment un chemin de guidage permettant la circulation desdites billes (10).

3. Câble pour commande à distance (C) selon l'une quelconque des revendications précédentes, **caractérisé en ce que** lesdites cages (14) forment des boucles oblongues et fermées.

4. Câble pour commande à distance (C) selon l'une quelconque des revendications précédentes, **caractérisé en ce que** lesdites cavités (15) desdites cages (14) débouchent sur la face interne (32) dudit élément cylindrique interne (30) en formant des orifices en boucle ouverte (17), la portion complémentaire non débouchante (18) fermant de manière complémentaire la boucle ouverte dudit orifice (17).

5. Câble pour commande à distance (C) selon l'une quelconque des revendications précédentes, **caractérisé en ce que** ledit élément cylindrique externe (40) de ladite bague (20) comporte des lumières (43) communiquant avec lesdites cages (14) et permettant le passage d'une partie de la surface desdites billes (10).

6. Câble pour commande à distance (C) selon les revendications 4 et 5, **caractérisé en ce que** lesdites lumières (43) correspondent en projection aux dites portions complémentaires non débouchantes (18) de ladite cavité (15) desdites cages (14).

7. Câble pour commande à distance (C) selon l'une quelconque des revendications précédentes, **caractérisé en ce que** ladite bague (20) est équipée d'une garniture d'étanchéité annulaire (13) destinée à protéger lesdites cages (14) de l'environnement extérieur.

8. Câble pour commande à distance (C) selon l'une quelconque des revendications précédentes, **caractérisé en ce que** ledit élément cylindrique externe (40) comporte un canal d'alimentation (45) desdites cages (14) en lubrifiant.

9. Câble de commande à distance (C) selon l'une quelconque des revendications précédentes, **caractérisé en ce qu'**il comporte deux bagues (20) juxtaposées.

## Claims

1. A remote control cable (C) comprising in particular a central core that moves axially while being guided in a sheath (5) by rolling and sliding members between first and second diametrically opposite rails, and an outlet rod (A) connected to each of the ends of said core and sliding inside a respective sheath endpiece (B),
the cable being **characterized in that** said sheath endpiece (E) includes between its inner face and the outer surface of said outlet rod (A), at least one ring (20) of sufficient length to ensure guiding said rod axially relative to said endpiece;
said ring (20) being made up of two coaxial cylindrical elements, an inner element (30) and an outer element (40) defining between them cages (14) in which trains of balls (10) are enclosed, said cages (14) comprising at least one cavity (15) opening out at least in part into the inner surface (32) of said inner cylindrical element (30) so as to enable rotary contact between said balls (10) and the outer surface of the rod (A) in such a manner as to reduce friction between said rod (A) and the endpiece (B).

2. A remote control cable (C) according to claim 1, **characterized in that** said cages (14) form guide paths enabling said balls (10) to circulate.

3. A remote control cable (C) according to either one of the preceding claims, **characterized in that** said cages (14) form oblong closed loops.

4. A remote control cable (C) according to any preceding claim, **characterized in that** said cavities (15) of said cages (14) open out to the inner face (32) of said inner cylindrical element (30) to form open loop orifices (17), the complementary non-open portions (18) closing in complementary manner the open loops of said orifices (17).

5. A remote control cable (C) according to any preceding claim, **characterized in that** said outer cylindrical element (40) of said ring (20) includes slots (43) communicating with said cages (14) and allowing surface portions of said balls (10) to pass therethrough.

6. A remote control cable (C) according to claims 4 and 5, **characterized in that** said slots (43) coincide in projection with said non-open complementary portions (18) of said cavities (15) of said cages (14).

7. A remote control cable (C) according to any preceding claim, **characterized in that** said ring (20) is fitted with an annular sealing gasket (13) for protecting said cages (14) from the outside environment.

8. A remote control cable (C) according to any preceding claim, **characterized in that** said outer cylindrical element (40) has a channel (45) for feeding said cages (14) with lubricant.

9. A remote control cable (C) according to any preceding claim, **characterized in that** it includes two juxtaposed rings (20).

## Patentansprüche

1. Fernbedienungskabel (C) umfassend ein zentrales Kontaktstück, das sich axial bewegt, indem es in einem Leitungskanal (5) durch Rollelemente geführt wird und zwischen einer ersten Schiene und einer zweiten diametral gegenüberliegenden Schiene gleitet, und einen Ausgangsschaft (A), der mit jedem der Enden des Kontaktstücks verbunden ist und im Inneren eines Leitungskanalendstückes (B) gleitet,
**dadurch gekennzeichnet, dass** das Leitungskanalendstück (B) zwischen seiner Innenseite und der äußeren Oberfläche des Ausgangsschafts (A) wenigstens eine ausreichend lange Hülse (20), um die axiale Führung des Schafts bezüglich des Endstücks zu gewährleisten, aufweist;
wobei die Hülse (20) jeweils innen (30) und außen (30) aus zwei koaxialen zylindrischen Elementen zusammengesetzt ist, die zwischen sich Gehäuse (14) begrenzen, in denen Kugelwerke (10) eingeschlossen sind, wobei die Gehäuse (14) wenigstens einen Hohlraum (15) aufweisen, der wenigstens teilweise an der inneren Oberfläche (32) des inneren zylindrischen Elements (30) angrenzt, so dass der Rotationskontakt der Kugeln (10) mit der äußeren Oberfläche des Schafts (A) derart möglich ist, dass die Reibungen zwischen dem Schaft (A) und dem Endstück (B) reduziert werden.

2. Fernbedienungskabel (C) nach Anspruch 1, **dadurch gekennzeichnet, dass** die Gehäuse (14) einen Führungsweg bilden, der die Zirkulation der Kugeln (10) ermöglicht.

3. Fernbedienungskabel (C) nach einem der vorhergehenden Ansprüche, **dadurch gekennzeichnet, dass** die Gehäuse (14) längliche und geschlossene Schleifen bilden.

4. Fernbedienungskabel (C) nach einem der vorhergehenden Ansprüche, **dadurch gekennzeichnet, dass** die Hohlräume (15) der Gehäuse (14) an der Innenseite (32) des Inneren zylindrischen Elements (30) angrenzen, indem sie Öffnungen als offene Schleife (17) bilden, wobei der komplementäre, nicht angrenzende Abschnitt (18) die offene Schleife der Öffnung (17) komplementär schließt.

5. Fernbedienungskabel (C) nach einem der vorhergehenden Ansprüche, **dadurch gekennzeichnet, dass** das äußere zylindrische Element (40) der Hülse (20) Öffnungen (43) aufweist, die mit den Hohlräumen (14) in Verbindung stehen und den Durchtritt eines Teils der Oberfläche der Kugeln (10) zulassen.

6. Fernbedienungskabel (C) nach Anspruch 4 und 5, **dadurch gekennzeichnet, dass** die Öffnungen (43) in der Projektion den komplementären, nicht angrenzenden Abschnitten (18) des Hohlraums (15) der Gehäuse (14) entsprechen.

7. Fernbedienungskabel (C) nach einem der vorhergehenden Ansprüche, **dadurch gekennzeichnet, dass** die Hülse (20) mit einem ringförmigen Dichtungselement (13) versehen ist, das zum Schutz der Hohlräume (14) vor der äußeren Umgebung bestimmt ist.

8. Fernbedienungskabel (C) nach einem der vorhergehenden Ansprüche, **dadurch gekennzeichnet, dass** das äußere zylindrische Element (40) einen Kanal zur Schmiermittelzufuhr (45) der Hohlräume (14) aufweist.

9. Fernbedienungskabel (C) nach einem der vorhergehenden Ansprüche, **dadurch gekennzeichnet, dass** es zwei nebeneinander liegende Hülsen (20) aufweist.
